# EUROPEAN PATENT APPLICATION

(11) **EP 4 704 280 A1**
(43) Date of publication of application: **04.03.2026**
(21) Application number: 24196658.9
(22) Date of filing: 27.08.2024
(51) Int. Cl.: H02J 3/00, H02J 3/38, H02J 13/00

(54) **COMPUTER-IMPLEMENTED METHOD, SYSTEM AND COMPUTER PROGRAM PRODUCT FOR OPTIMIZING AN ELECTRIC POWER DISTRIBUTION NETWORK**

(71) Applicant: Siemens Aktiengesellschaft, 80333 München (DE)
(72) Inventor: Loukrezis, Dimitrios, 80809 München (DE); Ludwig, Christoph Ernst, 85737 Ismaning (DE); Stursberg, Paul, 80469 München (DE); Heuer, Christian, 21220 Seevetal (DE); Duckheim, Mathias, 91052 Erlangen (DE)
(74) Representative: Siemens Patent Attorneys

(57) **Abstract**

A computer-implemented method for optimizing an electric power distribution network, characterized in that the method comprises:
computing, by a reduction module, a reduced order model which approximates a power flow model of the electric power distribution network, wherein the models each use random parameters and control parameters as input, and
performing, by a simulation module, a probabilistic simulation using the reduced order model to estimate a state parameter of the electric power distribution network, and
computing, by a reliability module, a failure probability based on the estimated state parameter, and
optimizing, by a control module, values for the control parameters to achieve an operational objective

The invention also relates to a corresponding system and computer program product.

## Description

The present invention relates to a computer-implemented method for optimizing an electric power distribution network according to claim 1, a system for optimizing an electric power distribution network according to claim 10, and a computer program product according to claim 15.

The first generation of grid control system software for the control center was developed in the 1970s. It used server computers specially configured for this application, which were installed onsite in the computer room of the network operator's control center. The server computers were typically redundantly designed to ensure availability of the grid control system functionality for more than 99.999% of the time. In some cases, even today, the redundant server computers are installed at different locations to make the overall system even more resistant and, for example, to ensure control center functionality through the server computers at the other location even in the event of disasters such as earthquakes or fire at one location.

From the product brochure "Intelligent control center technology - Spectrum Power", Siemens AG 2017, Article-No. EMDG-B90019-00-7600, software for a so-called "Supervisory Control and Data Acquisition (SCADA)" system for use in a control center is known. SCADA systems have long been known for controlling and monitoring energy networks (Wikipedia permanent link: https://en.wikipedia.org/w/index.php?title=SCADA&oldid=858433181). Measurement values from sensors, for example from voltage measuring devices and current measuring devices in the energy network, are aggregated and transmitted to the control center. Control commands are sent to the energy network to control circuit breakers, tap changers of transformers, disconnectors and other controllable equipment in the energy network, as well as to control energy generators such as power plants. These control commands are received and processed by "Remote Terminal Units" (RTUs), "programmable logic controllers" (PLCs) and "intelligent electronic devices" (lEDs) to control the circuit breakers, disconnectors, etc. In today's control center, a local data center is often provided on which the control center software, such as Spectrum Power, runs. The control center software is usually operated in a central computer arrangement, which can be designed as a data center with processors, data storage devices and screens. The term "central" refers to the fact that all measurement data from the energy network and all control commands for the energy network are processed centrally. Technicians are kept on standby around the clock in the control center to monitor the SCADA displays of the current operating status of the energy network and to take countermeasures such as shutting down a network section in the event of a fault.

A partial or complete design of the computer arrangement of the control center software as a cloud application, i.e. a server arrangement with decentrally distributed resources for data processing and data storage, which are connected via a data network such as the Internet, can also be carried out.

Electric power distribution is the final stage in the delivery of electricity, traditionally comprising the delivery of electricity to households and small-scale industrial consumers. However, in recent years, the pool of energy resources connected to the distribution grid (distributed energy resources, DERs) has been substantially diversified, with further diversification underway. This diversification is owed predominantly to the integration of distributed power generation (e.g., renewable energy sources like solar PV) and of charging points for electric vehicles into the power distribution network, as well as due to heating electrification with the integration of heat pumps.

As a side effect of the ever-increasing spread of distributed energy generation, for example through photovoltaic systems or wind turbines, the determination of a system state of the energy network is made more difficult by the ever-increasing number of local energy generators feeding into the low and medium voltage network. In particular, recording the current state in the lower voltage levels (medium and low voltage) is becoming increasingly important because the networks in the lower voltage levels are more heavily loaded by the decentralized feed-ins.

All these factors make it more difficult not only to determine the current network status but also to predict the future network status.

The dependence on weather influences is increasing because, for example, solar cells are strongly influenced by cloud cover and wind turbines by wind strength. These problems also have an impact on the next higher voltage level - a high-voltage energy transmission network - which is therefore more difficult to control and predict.

The operating personnel in a control center for an electrical energy network require software for evaluating measurement data so that, for example, a network state can be determined by means of a network analysis. For the typically meshed transmission network of the high-voltage or medium-voltage level, measurement data such as voltage, current, active power, reactive power and, if necessary, phase angle can usually be recorded for a large number of measuring points. Often the measurement data is even redundant, so that a high accuracy and reliability of the measurement data is achieved.

In the distribution network, on the other hand, which is typically assigned to the low-voltage level and partly also to the medium-voltage level, independent sub-networks with a radial structure are often provided, which are not comprehensively monitored with measuring devices. However, additional data from e.g. intelligent electricity meters (i.e. devices that can be read remotely via the Internet) can be taken into account.

Software for data acquisition in a distribution network and for controlling this distribution network is known from the product brochure "Spectrum Power 7 v2.30 SP2 Distribution Network Applications " (hereinafter referred to as DNA), Siemens AG 2021, AS-DNA-EN, Edition 07.2021. The superordinate transmission network with higher nominal voltage is not taken into account, i.e. no interactions with this network are considered.

The numerous uncertainties induced by load diversification pose great challenges regarding the planning and stable operation of the distribution network. For example, fluctuations in electricity production and consumption, e.g., strongly volatile renewable energy production or irregular charging of electric vehicles, can in turn cause fluctuations in voltages and loading of distribution assets, eventually leading to an increased risk of network failure. Distribution system operators (DSOs) can stabilize the network through operational interventions, i.e. with the help of control parameters. These may include changes to the network configuration (e.g., switch positions, on load tap changers (OLTC)) as well as interventions directly into load and generation (e.g., limiting maximal charging power of EV charging points). However, the corrective compensation of network instabilities may in some cases be expensive (due to the short time horizon) and comes with technical challenges (e.g., requiring real-time connectivity of assets).

To address these challenges, DSOs need to understand, limit, and reduce the risk of critical grid states sufficiently early ahead of time (e.g., 24 hours in advance for operational planning), which allows them to choose network control actions in a timely and cost-efficient manner.

In contrast to transmission systems most distribution systems show a lack in measurement information and therefore the system state can be known and forecasted only as a probability distribution. This is especially true since the future state of the network that needs to be controlled depends on uncertain parameters (e.g., behavior of customers, solar irradiance). Hence, this uncertainty needs first to be acknowledged and quantified. On the other hand, it is not required for grid operation to realize specific setpoints for power and voltage at given grid buses, but only to keep the state variable in a stable and save operating regime. Decision support thus needs to take into account the uncertainties mentioned above in order to meet that objective.

Up to now, the problem of reducing the likelihood of critical system states has primarily been the focus of network design and planning problems. Network planning, e.g., may be based on the formulation of an optimization problem with respect to power flow, with user-defined objectives (e.g., minimization of operation cost), configuration boundary conditions (e.g., network topology, renewable energy availability), and constraints (e.g., frequency and voltage safety boundaries). The optimization problem may be additionally complemented with reliability constraints (e.g., upper limit of inadequate energy supply, N-1 reliability constraints) and may be based on exemplary "worst case" load cases or may use a stochastic optimization approach to cover a larger set of scenarios. The solution to this optimization problem yields an optimal network configuration. In most cases, the planning of power distribution networks does not consider the impact of uncertainties due to load diversification. In the limited cases where uncertainty is considered, this concerns either a set of pertinent scenarios or worst-case analyses.

To address the problem described above, the adjustment of control parameters in operation, however, the mentioned approach cannot immediately be adapted: The required geographical resolution is much higher and the variability of scenarios that need to be considered is much larger. This makes a stochastic optimization approach as described above computationally infeasible given the limited amount of time available to decide if any interventions are required.

Instead, to reduce the risk of critical grid states in operation, DSOs often use pre-configured rule-based local control schemes (e.g., VoltVar control of solar PV, automatic operation of OLTCs). Furthermore, many interventions are initiated manually by operators, based on their experience and/or custom operation manuals. These schemes are very limited in their flexibility to react to changing situations in the grid and rely on expertise and experience of individual members of a DSOs staff, which makes it prone to suboptimal and inconsistent decisions, particularly in case of fluctuation and/or scarcity of qualified employees.

The publication EP4312329A1 discloses a method for controlling an electrical power network using a control unit. The method involves providing an a priori distribution for state variables of the power network, providing a measurement distribution of measured variables for a given network state, forming an a posteriori distribution for the state variables using the a priori distribution and measurement distribution, determining a probability for a critical state for at least one network node using the marginal distribution derived from the a posteriori distribution, and performing network-serving and/or system-serving measures when the determined probability is greater than or equal to a specified threshold value. The method utilizes probabilistic approaches, particularly Bayesian methods, to handle uncertainties in grid optimization. The control unit reacts with control interventions and/or regulatory interventions based on the probability of critical states at network nodes.

The publication DE102023203985B3 discloses a method for generating input data for state estimation of a power grid. The method involves classifying medium-voltage nodes into four categories based on the availability of real-time measurements and smart meter penetration rates in their associated low-voltage networks. For medium-voltage nodes with low smart meter penetration rates, the method uses a pre-determined covariance value that depends on the number of households in the respective low-voltage networks to establish covariances between aggregated electrical powers at the medium-voltage nodes. This approach addresses the challenge of determining realistic correlations or covariances for medium-voltage nodes with insufficient smart meter data.

The technical paper "Chance-Constrained AC Optimal Power Flow: A Polynomial Chaos Approach" by Tillmann Mühlpfordt et al. , IEEE Transactions on Power Systems (Volume: 34, Issue: 6, November 2019), addresses the challenge of incorporating uncertainties in power system optimization. The authors propose a method using polynomial chaos expansion to solve chance-constrained AC optimal power flow problems. This approach allows for the consideration of random parameters in the power flow model, which is relevant to the probabilistic simulation mentioned in the claim set. The method transforms the chance constraints into deterministic constraints, enabling the use of standard nonlinear programming solvers.

The technical paper "Surrogate-assisted reliability-based design optimization: a survey and a unified modular framework" by Maliki Moustapha et al., Struct Multidisc Optim 60, 2157-2176 (2019). https://doi.org/10.1007/s00158-019-02290-y, provides a comprehensive review of surrogate-assisted reliability-based design optimization (RBDO) methods. The paper discusses various surrogate modeling techniques.

Based on known approaches for managing electric power distribution networks, the present invention addresses the challenge of providing a computer-implemented method that enables day-ahead prediction and optimization of network configurations under uncertainty, while maintaining computational feasibility for real-world applications.

The invention solves this problem through a method according to claim 1.

The following paragraphs elaborate on definitions for the technical terms used in the claim set. The definitions should not be understood limiting to the disclosure, but rather as hinting on some ways of understanding implementations of the invention while not excluding interpretations not mentioned in the definitions. Accordingly, other implementations are within the scope of the following paragraphs.

Electric power distribution network: As used herein, an "electric power distribution network" refers to the portion of an electrical power system that delivers electricity from the transmission system to end users. It typically includes medium-voltage (1kV to 69kV) and low-voltage (less than 1kV) power lines, distribution transformers, switchgear, and other control equipment. The network may incorporate distributed energy resources such as solar photovoltaic systems, wind turbines, energy storage devices, and electric vehicle charging stations. The electric power distribution network is responsible for stepping down high transmission voltages to lower voltages suitable for customer use and distributing power to residential, commercial, and small industrial consumers over a defined geographic area.

Module: Any module may be implemented as a software module, e.g. an individual procedure as part of a larger software, installed on a server or cloud infrastructure. All modules can be part of the same software or distributed over different software packages. A module could also be implemented in hardware/firmware as part of a computer system comprising a processor, memory, and data storage.

Day-ahead forecast: As used herein, the term "day-ahead forecast" refers to a prediction of future conditions in an electric power distribution network for the upcoming 24-hour period. This type of forecast is a typical requirement for planning done by distribution grid utilities. It encompasses a projection of expected electricity load and generation (feed-in) at various points in the network, typically generated for each hour of the following day. The forecast is used as input for optimizing control parameters and operational planning of the electric power distribution network in advance of real-time operations.

The main application of the inventive method is to provide an improved day-ahead forecast for a utility company running a distribution grid.

The inventive method could also be applied to determine a forecast for a longer time period into the future, e.g. a couple of days up to a week. However, as load and in-feed (which are dependent on the accuracy of the weather report for renewables) projections become increasingly more insecure going beyond the one day time horizon, the applicability of the method has to be verified by simulation or comparison with real measurement data taken at later time.

With the inventive method, the forecast could also be updated for a shorter time interval as 24 hours, but as it approaches real-time operation, uncertainty also increases due to interference with short-time control measures.

Reduced order model: A reduced order model (ROM) is a simplified representation of a complex system that preserves its essential characteristics while reducing computational complexity. In the context of power systems, a ROM approximates the full power flow model with sufficient accuracy using fewer variables or equations. The ROM enables faster simulations and optimizations compared to the full model, making it suitable for working through large scale input data sets in power system management. ROMs can be tested and approved with regard to the level of accurate approximation that they achieve by simply comparing the ROMs result with the results of simulations of the non-reduced power flow model. The ROM is a surrogate model that can be applied to the problem at hand by sampling approaches. A suitable ROM in the context of this invention allows for a proper and reasonably accurate representation of the initial power flow model while a the same time it can be sampled very fast.

Power flow model: A power flow model is a mathematical representation of the electrical characteristics and behavior of a power system. It describes how power flows through the network based on the physical laws governing electrical circuits. The model typically includes information about network topology, line impedances, transformer characteristics, generator outputs, and load demands. Power flow models are used to analyze system states, voltage profiles, and power flows under various operating conditions.

Random parameters: In the context of this invention, random parameters refer to variables in the power system model that are inherently uncertain and cannot be directly controlled by the system operator. These may include factors such as electricity load per customer, generation output from renewable sources (e.g., solar photovoltaic installations), activity of heat pumps, and charging power of electric vehicle chargers. Random parameters are typically represented by probability distributions to capture their variability and uncertainty.

Control parameters: Control parameters are variables in the power system that can be adjusted by the system operator to influence the network's behavior and performance. These may include settings for on-load tap changers in transformers, switch positions in the network configuration, setpoints for controllable loads or generators, and settings for voltage regulation devices. The optimization process aims to find optimal values for these control parameters to achieve desired operational objectives.

Probabilistic simulation: A probabilistic simulation is a computational technique that incorporates uncertainty and variability into the analysis of a system. In the context of power systems, it involves running multiple simulations with different realizations of the random parameters to estimate the range and likelihood of possible system states. Probabilistic simulations can use methods such as Monte Carlo sampling or other uncertainty propagation techniques to generate a statistical representation of system behavior.

State parameter: A state parameter represents a measurable or calculable quantity that describes the condition or performance of the power system at a given point in time. In the context of this invention, state parameters may include voltages at various nodes, currents through lines, power flows, or other quantities relevant to assessing the operational limits and stability of the network components.

Failure probability: Failure probability refers to the likelihood that the power system or its components will experience a state that violates operational constraints or leads to service interruptions. This may include events such as voltage violations (e.g. voltages on some nodes in the distribution grid exceed a +/- 10% deviation from nominal voltage), thermal overloads of lines or transformers, or frequency deviations beyond acceptable limits. The failure probability is computed based on the results of the probabilistic simulation and serves as a key metric for assessing system reliability and optimizing control actions.

Operational objective: An operational objective is a goal or target that the power system operator aims to achieve through the optimization of control parameters. This may include minimizing the probability of system failures, reducing operational costs, maximizing the integration of renewable energy sources, minimizing CO2 production by generators in the grid, or balancing multiple competing objectives. The operational objective is typically expressed as a mathematical function to be minimized or maximized in the optimization process.

Polynomial chaos expansion: As used herein, the term "polynomial chaos expansion" refers to a method for representing random variables in terms of orthogonal polynomials. In the context of this invention, polynomial chaos expansion may preferably be used as an approach for computing the reduced order model of the power flow system. This method allows for efficient propagation of uncertainties through the model by expressing stochastic quantities as orthogonal polynomials of random variables. The polynomial chaos expansion provides a framework for quantifying how uncertainties in input parameters, such as load variations or renewable energy generation, affect the output state parameters of the electric power distribution network.

The following paragraphs highlight alternative applications of the inventive method beyond optimization of an electrical distribution grid.

### Smart City Energy Management

The probabilistic optimization method could be applied to smart city energy management systems. By considering the uncertainties in energy consumption patterns across various urban infrastructures (e.g., buildings, transportation systems, public lighting), city planners could optimize the distribution of energy resources more efficiently. This would help balance the load on the grid, reduce the likelihood of blackouts during peak times, and potentially lower energy costs for the city and its residents.

### Renewable Energy Integration in Microgrids

The invention could be particularly useful for optimizing the integration of renewable energy sources in microgrids. These localized power systems, often used in remote areas or for specific facilities like hospitals or university campuses, face significant challenges due to the intermittent nature of renewable sources. The probabilistic approach could help microgrid operators better predict and manage the variability of solar and wind power, ensuring stable power supply and reducing reliance on backup fossil fuel generators.

### Electric Vehicle Charging Infrastructure Planning

As electric vehicle (EV) adoption increases, the strain on power distribution networks from charging stations is becoming a significant concern. This invention could be applied to optimize the planning and operation of EV charging infrastructure. By modeling the probabilistic nature of EV charging patterns and integrating this with other grid demands, network operators could more effectively plan the placement and capacity of charging stations while minimizing the risk of grid instability.

### Data Center Power Management

Large-scale data centers require enormous amounts of electricity and have complex, variable power demands. Applying this probabilistic optimization method to data center power management could help operators better predict and manage their energy needs. This could lead to more efficient use of power resources, reduced risk of outages, and potentially significant cost savings in an industry where energy costs are a major operational expense.

### Agricultural Irrigation Systems

In modern agriculture, large-scale irrigation systems can place significant demands on local power grids, especially in rural areas. The invention could be applied to optimize the power distribution for these systems, taking into account uncertainties such as weather patterns, crop water needs, and energy prices. This could help farmers reduce energy costs, ensure reliable power for critical irrigation periods, and contribute to more sustainable agricultural practices.

### Hospital Energy Management

Hospitals require a constant, reliable power supply for critical medical equipment and operations. The probabilistic optimization method could be applied to hospital energy management systems to better predict and manage power needs across different departments and equipment types. This could help ensure uninterrupted power supply to critical areas, optimize the use of backup generators, and potentially reduce overall energy costs without compromising patient care.

### Industrial Process Optimization

In manufacturing and process industries, energy consumption can vary significantly based on production schedules, equipment usage, and other factors. Applying this invention to industrial energy management could help optimize power distribution across different processes and equipment. This could lead to more efficient energy use, reduced risk of production disruptions due to power issues, and potentially significant cost savings in energy-intensive industries.

### Smart Home Energy Management Systems

On a smaller scale, the probabilistic optimization method could be integrated into smart home energy management systems. By considering uncertainties in household energy consumption patterns, renewable energy generation (e.g., rooftop solar), and energy storage systems, these systems could more effectively manage power distribution within the home. This could lead to reduced energy costs for homeowners, better integration of home renewable energy systems, and improved overall grid stability as more homes adopt smart energy management.

In a preferred embodiment of the inventive computer-implemented method, the state parameter contains at least one of the following parameters: voltages, current through lines, power limits of transformers, other state parameters that are relevant for operational limits of components. This embodiment provides a comprehensive assessment of the network's state by considering multiple critical parameters. Voltages and currents are fundamental indicators of network stability and power quality. Including state parameters relevant for operational limits ensures that the method accounts for constraints specific to different network components, such as thermal limits or voltage regulation capabilities. Considering power limits of transformers is crucial for preventing overloading and potential equipment damage. Alternative implementations could include additional state parameters such as frequency, phase angles, or power factor at various nodes in the network.

In a further preferred embodiment of the inventive computer-implemented method, the operational objective includes the minimization of a target function taking into account at least one of the following aspects: failure probability, costs associated with failures, compensation of customers for non-availability of services and/or assets, technician deployments. This approach allows for a more holistic optimization that balances reliability improvements with economic considerations. Minimizing failure probability directly addresses the core goal of network stability. Including costs associated with failures provides a financial incentive for reliability improvements. Considering customer compensation and technician deployments accounts for the broader operational and customer service impacts of network failures. Alternative implementations could incorporate additional factors in the target function, such as environmental impact, regulatory compliance metrics, or long-term infrastructure investment needs.

In a further preferred embodiment of the inventive computer-implemented method, the optimized control parameters are used to control the electric power distribution network by sending control signals to at least one of the following controllable devices: on-load tap changer settings for transformers, switch positions of switchgear, controllable loads, controllable generators, capacitor banks settings, flexibility of load and/or generation at connected distributed energy resources. This embodiment enables direct implementation of the optimization results to actively manage the network. Adjusting on-load tap changers allows for voltage regulation, while controlling switch positions can reconfigure the network topology for optimal power flow. Managing controllable loads and generators provides flexibility in balancing supply and demand. Capacitor bank settings offer reactive power control for improved power factor and voltage stability. Leveraging the flexibility of distributed energy resources allows for more granular control and better integration of renewable sources. Alternative implementations could include control of energy storage systems, demand response programs, or advanced power electronics devices for power flow control.

In a further preferred embodiment of the inventive computer-implemented method, the control signals are directly sent to the controllable devices by a power distribution network utility. This direct control approach ensures rapid and coordinated implementation of the optimized settings across the network. It allows the utility to maintain centralized oversight and responsibility for network stability. The direct communication pathway can minimize latency and reduce the risk of miscommunication or conflicting control actions. Alternative implementations could include a hierarchical control structure with local controllers interpreting and implementing high-level directives from the central optimization system.

In a further preferred embodiment of the inventive computer-implemented method, the control signals are used by a controllable asset aggregator, the aggregator being an intermediary that provides generation and/or load flexibility to the power distribution network, to generate adjusted control parameters which are send to the controllable devices. This approach leverages the expertise and capabilities of specialized aggregators to manage diverse sets of distributed energy resources. The aggregator can optimize the response of multiple assets to meet the network's needs while considering asset-specific constraints and owner preferences. This model can facilitate the integration of smaller-scale resources that might be impractical for the utility to control directly. Alternative implementations could involve multiple aggregators with different specializations (e.g., residential vs. industrial loads) or a hybrid model combining direct utility control and aggregator-mediated control for different asset classes.

In a further preferred embodiment of the inventive computer-implemented method, the random parameters include at least one of: electricity load per customer, power generation of photovoltaic installations, activity of heat pumps, and charging power of electric vehicle chargers. This selection of random parameters captures key sources of uncertainty in modern distribution networks. Electricity load per customer accounts for the variability in individual consumption patterns. Including generation from photovoltaic installations addresses the intermittency of solar power. Considering heat pump activity reflects the growing electrification of heating systems and their weather-dependent operation. Incorporating electric vehicle charging power accounts for the increasing impact of transportation electrification on grid loads. Alternative implementations could include additional random parameters such as wind power generation, industrial process loads, or energy storage system behavior.

In a further preferred embodiment of the inventive computer-implemented method, computing the reduced order model makes use of least one of the following approaches: model order reduction, snapshot interpolation, machine learning regression, polynomial chaos expansion. These approaches offer different trade-offs between accuracy, computational efficiency, and ease of implementation. Model order reduction techniques can preserve the physical structure of the original model while reducing its complexity. Snapshot interpolation can capture the system's behavior across a range of operating conditions with relatively low computational overhead.

Machine learning regression can identify complex, non-linear relationships in the data and potentially adapt to changing network conditions over time. Polynomial chaos expansion provides a framework for efficiently propagating uncertainties through the model. Test implementations of the inventive method with polynomial chaos expansion have shown that this approach is well suited and is a preferred choice for computing the ROM. Alternative implementations could explore hybrid approaches combining multiple reduction techniques or adaptive methods that adjust the model complexity based on the current operating conditions.

In a further preferred embodiment of the inventive computer-implemented method, performing the probabilistic simulation comprises using a Monte Carlo sampling method. Monte Carlo sampling is a versatile and robust approach for uncertainty quantification. It allows for the incorporation of complex, non-linear relationships between random parameters and system outputs. The method can handle a wide range of probability distributions for the input parameters. Monte Carlo sampling provides a straightforward way to estimate the distribution of output variables and compute probabilities of specific events or conditions.

Based on known systems for network analysis, the invention further addresses the challenge of providing a system that enables day-ahead prediction and optimization of network configurations under uncertainty, while maintaining computational feasibility for real-world applications.

The invention solves this problem through a system for optimizing an electric power distribution network according to claim 10. Preferred embodiments result from the dependent claims 11 to 14, whereby the same advantages as initially explained for the inventive computer-implemented method apply analogously.

Based on known computer program products for network analysis, the invention further addresses the challenge of providing a computer program product that enables day-ahead prediction and optimization of network configurations under uncertainty, while maintaining computational feasibility for real-world applications.

The invention solves this problem through a computer program product according to claim 15. The same advantages as initially explained for the inventive computer-implemented method apply analogously.

To elaborate further on the technical details of the invention, an example embodiment is described below.

The innovation offers a method and a corresponding software tool for day-ahead prediction of the distribution network's optimal configuration under the influence of uncertainties. Instead of a simulation with fixed feed-in power and loads and/or worst-case scenarios, the power flow optimization problem is restructured such that the *objective is to minimize the probability of network failures.* Additionally, to address the issue of computation time, a reduced order modeling approach is integrated, such that costly power flow analyses are replaced by computationally inexpensive surrogate model evaluations.

The methodology consists of the following components:
1. A power flow model *m(.).*
2. Categorization of model parameters into (a) deterministic, (b) random, and (c) control parameters. The deterministic parameters are assumed to be known. The random parameters, ***r*,** are inherently uncertain and cannot be controlled by the operator. The control parameters, ***c*,** are used by the operator to stabilize the network's states in the case where an instability occurs. The power flow model can then be written as *m(**r**,**c**)* and the network states are then given as ***s*** = *m(**r**,**c**).*
3. Probabilistic modeling of the random model parameters **r**, typically in the form of probability distributions. These random parameters typically include (among others) electricity load per customer, generation of PV installations, activity of heat pumps, and charging power of EV chargers. The probabilistic modeling can be based on expert knowledge or on available data sets, e.g., historical smart meter values, load forecasts, historical/forecast weather data with respect to solar radiation or wind power, charging patterns, etc.
4. Computation of a reduced order model (ROM) *m'(**r**,**c**)* which approximates the original power flow model *m(**r**,**c**)* with sufficient accuracy. The ROM is computed using a suitable method, exemplarily, model order reduction, snapshot interpolation, or machine learning regression.
5. Probabilistic simulation and estimation of the distribution network's states, using the surrogate model *m'(.)* and the uncertain parameters ***r***. This step assumes that the control parameters ***c*** remain fixed. The probabilistic simulation will be based on a Monte Carlo sampling method or other suitable uncertainty propagation method. The results of this simulation will be statistics (statistical moments, distributions) with respect to the network's states.
6. Computation of probability that critical (failure) states occur. Failure probability computation is based on post-processing the results of the probabilistic simulation in (2), exemplarily, counting the number of failures over all samples of the Monte Carlo simulation or by post-processing the probability distributions of the network's states. The failure probability is denoted as *PF(m'(**r**,**c**))* = *PF(**r**,**c**).* Similar to (5), this step assumes that the control parameters remain fixed.
7. Formulation and solution of an optimal flow problem that seeks to minimize the failure probability as computed in (6). In this step, the *control parameters* are the ones that are optimized such that the failure probabilities resulting from the impact of the *random parameters* are minimized. Then, the optimal configuration of the distribution network is the one corresponding to the minimum probability of a failure occurrence. In an abstract form, the optimization problem reads: Find ***c*** such that *PF(**r**,**c**)* is minimized. Essentially, the minimization problem engulfs the failure probability estimation performed in (6), which is repeated for each update of the control parameters ***c***.

The formulation of the optimization problem may include appropriate costs of adjusting the control variables ***c***. In that case, the optimization problem can be stated as: Find ***c*,** such that PF(***r***,***c***) as well as the associated costs are minimized. This formulation involves the notion of balancing *acceptable failure risks* and corresponding financial invest.

Note that the use of the ROM, *m'(**r**,**c**),* as surrogate model is crucial in order to mitigate the computational cost of steps (5), (6), and (7), i.e., uncertainty propagation, failure estimation, and optimization. These steps become computationally unfeasible if a standard power flow model is used, due to unacceptable runtimes.

Accordingly, the software tool implementation can consist, in the example embodiment, of the following components:
1. A software component that performs power flow analysis for given realizations (fixed values) of both random and control parameters.
2. A software component that allocates probability distributions to the selected random parameters and samples them according to said distributions.
3. A software component that computes a sufficiently accurate ROM of the power flow model implemented using the software component (1).
4. A software component that samples the ROM according to the distributions assigned to the random model parameters.
5. A software tool that computes the probability of one or more events, given a random-parameter-dependent model and the corresponding random parameter distributions.
6. A software tool that optimizes the values of a parameter set, given an objective function dependent on those parameters. In our case, the parameter set refers to the control parameters c and the objective to be minimized will be *PF(**r**,**c**).* The objective is complemented with boundary conditions and constraints, as necessary by the specific problem at hand.

The main innovation consists of a reliability-based power network optimization method and software tool, which aims to minimize power network failure events. A major point is the solution of the optimization problem within an acceptable time-window, for which the use of a ROM is critical. Its main differences to the current state-of-the-art are:
- Acknowledges the presence of uncertainties in grid optimization.
- Quantifies the impact of uncertainty in the form of failure probability.
- Optimizes the grid configuration such that failures are mostly, if not entirely, avoided.
- Avoids redundancies introduced by worst-case analyses, which typically result in too conservative network configurations, thus, to unrequired costs.
- Essentially, the methodology performs a *predictive* grid stabilization instead of a *reactive* one, in the sense that the resulting network configuration is the one most resistant to instabilities.
- The predictive stabilization reduces the number of network instabilities and failures and thus avoids costly grid reinforcements.
- The predictive results are computed fast and reliably with the use of a sufficiently accurate, yet computationally inexpensive surrogate model.

The invention as described in claim 1 offers several significant advantages over previous solutions:
1. Improved accuracy in predicting network states: By using a reduced order model that approximates the full power flow model, the invention can capture complex system dynamics while maintaining computational efficiency. This allows for more accurate estimation of state parameters compared to simplified or rule-based approaches.
2. Comprehensive uncertainty quantification: The method explicitly accounts for random parameters such as electricity load, renewable generation, and EV charging patterns through probabilistic modeling. This provides a more realistic representation of the uncertainties inherent in modern distribution networks compared to deterministic or worst-case scenario approaches.
3. Risk-based optimization: By computing failure probabilities based on estimated state parameters, the invention enables optimization of control parameters to minimize the likelihood of network failures. This risk-based approach allows for more effective management of network reliability compared to traditional methods that may not fully account for probabilistic events.
4. Computational efficiency: The use of a reduced order model significantly decreases computational time compared to using the full power flow model for probabilistic simulations and optimization. This makes the method feasible for day-ahead operational planning in real-world distribution networks.
5. Flexibility in operational objectives: The optimization of control parameters can be tailored to achieve various operational objectives beyond just minimizing failure probability. This could include balancing reliability improvements with associated costs or other performance metrics.
6. Proactive network management: By providing day-ahead predictions and optimized control strategies, the invention enables distribution system operators to take preventive actions rather than reactive measures. This can lead to improved network stability and reduced frequency of critical events.
7. Adaptability to changing network conditions: The probabilistic approach inherently accounts for variability in network conditions, making the method well-suited to handle the increasing integration of distributed energy resources and new load types in modern distribution grids.
8. Potential cost savings: By optimizing network configurations to minimize failure probabilities, the invention may reduce the need for costly grid reinforcements or emergency interventions, potentially leading to significant long-term cost savings for network operators.
9. Improved integration of renewable resources: The method's ability to handle uncertainties makes it particularly valuable for managing networks with high penetration of intermittent renewable energy sources, supporting the transition to cleaner energy systems.
10. Enhanced decision support: By providing quantitative assessments of failure probabilities and optimized control strategies, the invention offers valuable decision support for network operators, enabling more informed and effective management of distribution networks.

The following description sets forth exemplary aspects of the present disclosure. It should be recognized, however, that such description is not intended as a limitation on the scope of the present disclosure. Rather, the description also encompasses combinations and modifications to those exemplary aspects described herein. Non-limiting and non-exhaustive examples are described with reference to the following figures.

For better explanation of the invention, the following schematic representation shows:
Figure 1 a flowchart of the inventive method, and
Figure 2 an overview of an electric power distribution network.

The method 1 begins with step 2, which involves computing a reduced order model approximating a power flow model of the electric power distribution network.

Following step 2, the method 1 proceeds to step 3, where a probabilistic simulation is performed using the reduced order model and random parameters to estimate a state parameter.

Step 4 of the method 1 involves computing a failure probability based on the estimated state parameter obtained from step 3.

The final step of the method 1 is step 5, which optimizes values for the control parameters to achieve an operational objective.

The flowchart depicts the sequence of steps in the method 1, with each step connected by arrows indicating the flow of the process. The method 1 progresses from model computation to simulation, probability calculation, and finally optimization.

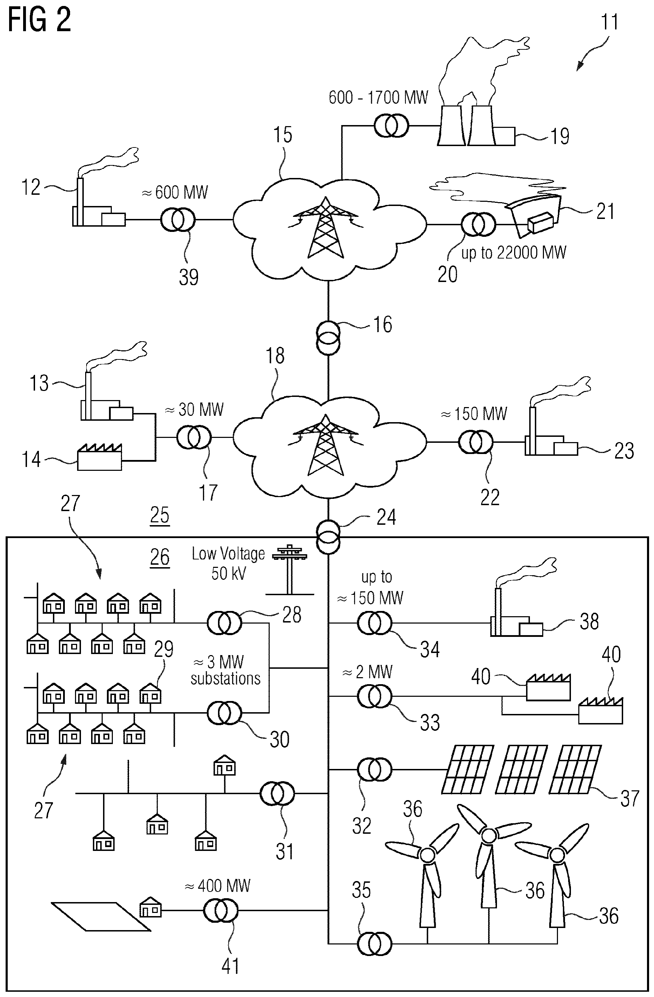

Figure 2 (source: Wikipedia, modified) provides an overview of an exemplary electric power distribution network 11, illustrating the various components and power flow from generation to end-users.

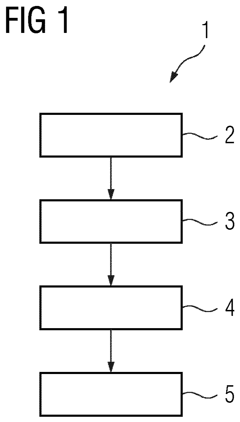

The upper portion of figure 1 highlights the structure of a typical transmission grid 25.

The figure shows multiple power generation sources, including a coal power plant 12 (generating approximately 600 MW), an industrial power plant 13 (ca. 30 MW) and associated factory 14, a nuclear power plant 19 (600MW -1700 MW), a hydro-electric plant (up to 22000 MW) and a medium-sized power plant 23 (around 150 MW).

The power plants 12,19,21 feed into a an extra high voltage network 15 (265kV-275kV,mostly AC, some HCDC) via transformers 19,20,21,39. The extra high voltage transmission network 15 is connected via step-down transformer 16 to a high voltage network 18 with 110kV nominal voltage (or above).

The industrial power plant 13 and the associated factory 14 as well as the medium-sized power plant 23 are connected to the high voltage network 18 via transformers 17,22.

The transmission grid 25 is connected to the distribution grid 26 (encapsulated with a rectangle) by transformer 24 which connects the high voltage network 18 to consumers such as residential areas 27 with single homes 29 via transformers 28,30,31,41. In the distribution grid 26 are also renewable energy resources, including wind power turbines 36, and solar panels 37 connected to the grid via transformers 32,35.

Additional transformers 33,35 are used to connect to industrial consumers 40 and a city power plant 38 with up to 150 MW power generation capacity.

List of element labels used in the two figures. The format is:

### | Element Label # | Description |

| 1 | flowchart for example of inventive method
| 2 | computing a reduced order model
| 3 | performing a probabilistic simulation
| 4 | computing a failure probability
| 5 | optimizes values for control parameters
| 11 | Overview of electric power distribution network
| 12 | coal power plant
| 13 | industrial power plant
| 14 | industrial facility/factory
| 15 | extra high-voltage grid, 265 to 275 kV (mostly AC, some HVDC)
| 16 | transformer
| 17 | transformer
| 18 | High voltage, 110kV and up
| 19 | nuclear power plant
| 20 | transformer
| 21 | hydro-electric plant
| 22 | transformer
| 23 | medium sized power plant
| 24 | transformer
| 25 | transmission grid
| 26 | distribution grid
| 27 | residential area
| 28 | transformer
| 29 | single home
| 30 | transformer
| 31 | transformer
| 32 | transformer
| 33 | transformer
| 34 | transformer
| 35 | transformer
| 36 | wind power turbines
| 37 | solar panels
| 38 | power transmission tower
| 39 | transformer
| 40 | industrial customers
| 41 | transformer

A variety of implementations have been described. Nevertheless, it will be understood that various modifications may be made without departing from the spirit and scope of the disclosure. Accordingly, other implementations are within the scope of the following claims.

## Claims

1. A computer-implemented method (1) for optimizing an electric power distribution network (26), **characterized in that** the method (1) comprises:
computing (2), by a reduction module, a reduced order model which approximates a power flow model of the electric power distribution network (1), wherein the models each use random parameters and control parameters as input, and
performing (3), by a simulation module, a probabilistic simulation using the reduced order model to estimate a state parameter of the electric power distribution network (26), and
computing (4), by a reliability module, a failure probability based on the estimated state parameter, and
optimizing (5), by a control module, values for the control parameters to achieve an operational objective.

2. The computer-implemented method of claim 1, **characterized in that** the state parameter contains at least one of the following parameters: voltages, current through lines, power limits of transformers, other state parameters that are relevant for operational limits of components.

3. The computer-implemented method of claim 1 or 2, **characterized in that** the operational objective includes the minimization of a target function taking into account at least one of the following aspects: failure probability, costs associated with failures, compensation of customers for non-availability of services and/or assets, technician deployments.

4. The computer-implemented method of one of the preceding claims, **characterized in that** the optimized control parameters are used to control the electric power distribution network (26) by sending control signals to at least one of the following controllable devices: on-load tap changer settings for transformers (24,28,30-35,41), switch positions of switchgear, controllable loads (40), controllable generators (36,37), capacitor banks settings, flexibility of load and/or generation at connected distributed energy resources (36,37).

5. The computer-implemented method of claim 4, **characterized in that** the control signals are directly send to the controllable devices (36,37,40) by a power distribution network utility.

6. The computer-implemented method of claim 4, **characterized in that** the control signals are used by a controllable asset aggregator, the aggregator being an intermediary that provides generation and/or load flexibility to the power distribution network, to generate adjusted control parameters which are send to the controllable devices (36,37,40).

7. The computer-implemented method of one of the preceding claims, **characterized in that** the random parameters include at least one of: electricity load per customer, power generation of photovoltaic installations, activity of heat pumps, and charging power of electric vehicle chargers.

8. The computer-implemented method of one of the preceding claims, **characterized in that** computing the reduced order model makes use of least one of the following approaches: model order reduction, snapshot interpolation, machine learning regression, polynomial chaos expansion.

9. The computer-implemented method of one of the preceding claims, **characterized in that** performing the probabilistic simulation comprises using a Monte Carlo sampling method.

10. A system for optimizing an electric power distribution network (26), the system being **characterized in that** it comprises:
a reduction module configured to compute (2) a reduced order model which approximates a power flow model of the electric power distribution network (26), wherein the models each use random parameters and control parameters as input, and
a simulation module configured to perform (3) a probabilistic simulation using the reduced order model and the random parameters to estimate a state parameter of the electric power distribution network (26), and
a reliability module configured to compute (4) a failure probability based on the estimated state parameter; and
a control module configured to optimize (5) values for the control parameters to achieve an operational objective.

11. The system of claim 10, **characterized in that** the control module is configured to use the optimized control parameters to control the electric power distribution network (26) by sending control signals to at least one of the following controllable devices: on-load tap changer settings for transformers (24,28,30-35,41), switch positions of switchgear, controllable loads (40), controllable generators (36,37), capacitor banks settings, flexibility of load and/or generation at connected distributed energy resources (36,37).

12. The system of claim 10 or 11, **characterized in that** the random parameters include at least one of: electricity load per customer, generation of photovoltaic installations, activity of heat pumps, and charging power of electric vehicle chargers.

13. The system of one of claims 10 to 12, **characterized in that** the reduction module is configured to compute the reduced order model making use of at least one of the following approaches: model order reduction, snapshot interpolation, machine learning regression, polynomial chaos expansion.

14. The system of one of claims 10 to 13, **characterized in that** the simulation module is configured to perform the probabilistic simulation comprising usage of a Monte Carlo sampling method.

15. A computer program product comprising instructions that, when executed by a computer, cause the computer to perform a method according to one of claims 1 to 9.
